# EUROPÄISCHE PATENTANMELDUNG

(11) **EP 0 973 045 A2**
(43) Veröffentlichungstag der Anmeldung: **19.01.2000**
(21) Anmeldenummer: 99110950.5
(22) Anmeldetag: 07.06.1999
(51) Int. Cl.: G01S 13/93

(54) **Verfahren und Vorrichtung zur Erfassung von Objekten im Umfeld eines Kraftfahrzeuges**

(30) Priorität: 16.07.1998 DE 19832079
(71) Anmelder: Volkswagen Aktiengesellschaft, 38436 Wolfsburg (DE)
(72) Erfinder: Anders, Peter, Dipl.-Ing., 38543 Hillerse (DE)

(57) **Zusammenfassung**

Die Erfindung betrifft ein Verfahren und eine Vorrichtung (1) zur Erfassung von Objekten im Umfeld eines Kraftfahrzeuges (2), umfassend mindestens teilweise um das Kraftfahrzeug (2) herum angeordnete Abstands-Sensoren (4 - 17), eine mit den Abstands-Sensoren (4 - 17) verbundene Auswerte- und Steuereinheit (3), der die Eigengeschwindigkeit V des Kraftfahrzeuges (2) zuführbar ist, wobei der Erfassungsbereich (18) der Abstands-Sensoren (4 - 17) von der Auswerte- und Steuereinheit (3) in Abhängigkeit von der Eigengeschwindigkeit V und Relativgeschwindigkeit der Objekte veränderbar ist.

## Beschreibung

Die Erfindung betrifft ein Verfahren und eine Vorrichtung zur Erfassung von Objekten im Umfeld eines Kraftfahrzeuges.

Aufgrund der zunehmenden Verkehrsdichte wurden verstärkt Versuche unternommen Fahrer-Assistenz-Systeme zu schaffen, die den Kraftfahrzeugführer während der Fahrt entlasten. Beispiele für solche Fahrer-Assistenz-Systeme sind ADR-Systeme, Einpark- und Ausparkhilfe-Assistenz-System und Systeme zum Erkennen von Objekten im "Toten Winkel" eines Kraftfahrzeuges. Allen Systemen gemeinsam ist das Erfassen von Objekten im Umfeld eines Kraftfahrzeuges, wozu Abstands-Sensoren Anwendung finden. Diese Abstands-Sensoren können beispielsweise als Radar-, Lidar- oder Ultraschall-Sensoren ausgebildet sein. Dabei besteht bei allen Systemen das Problem, alle relevanten Objekte zu erkennen, ohne den Kraftfahrzeugführer durch unnötige Informationen zu belasten.

Aus der DE 195 29 173 C1 ist ein Radar-Sensor zum Senden und Empfangen kontinuierlich frequenzmodulierter Signale bekannt, der Radarsignale über einen Zeitbereich ausstrahlt, wobei der Zeitbereich in Abhängigkeit von der Geschwindigkeit des Kraftfahrzeuges in der Weise festgelegt ist, daß der Zeitbereich bei einer größeren Geschwindigkeit länger und bei einer kleineren Geschwindigkeit kürzer ist, um die im Mittel abgestrahlte Leistung zu reduzieren, ohne die Meßempfindlichkeit zu reduzieren. Weiter wird dort vorgeschlagen, unter einer vorgegebenen Geschwindigkeit, vor allem bei einem stehenden Kraftfahrzeug keine Radarsignale abzustrahlen. Nachteilig an der bekannten Vorrichtung ist, daß teilweise Objekte zu spät erkannt werden, beispielsweise Objekte, die sich mit großer Geschwindigkeit auf das langsam bewegende Kraftfahrzeug zu bewegen.

Der Erfindung liegt daher das technische Problem zugrunde, ein Verfahren und eine Vorrichtung zur Erfassung von Objekten im Umfeld eines Kraftfahrzeuges zu schaffen, mittels derer relevante Objekte sicher erkannt und unwichtige Objekte weitgehend ignoriert werden.

Die Lösung des technischen Problems ergibt sich aus den Merkmalen der Patentansprüche 1 und 4. Durch die Adaption des Erfassungsbereiches der Abstands-Sensoren in Abhängigkeit von der Eigengeschwindigkeit und der Relativgeschwindigkeit der erfaßten Objekte, wobei der Erfassungsbereich zu höheren Eigengeschwindigkeiten und/oder Relativgeschwindigkeiten hin vergrößert und zu geringen Eigengeschwindigkeiten hin auf einen Grenzwert größer Null verkleinert wird, wird situationsabhängig die Anzahl der auszuwertenden Objekte angepaßt. Dem liegen folgende Überlegungen zugrunde. Bei einer Eigengeschwindigkeit ungleich Null sind prinzipiell alle Objekte unabhängig von ihrer Relativgeschwindigkeit interessant. Eine Warnung vor einem Objekt muß dann so frühzeitig erfolgen, daß Kraftfahrzeugführer innerhalb der Reaktionszeit auf das Objekt reagieren kann. Bewegt sich das Objekt daher mit großer Geschwindigkeit auf das Kraftfahrzeug zu, muß es entsprechend schon bei größerem Abstand zum Kraftfahrzeug erfaßt werden. Anschaulich sei dies am Beispiel einer Autobahnauffahrt erklärt. Fährt das Kraftfahrzeug auf der Autobahn, so sind aufgrund der hohen Geschwindigkeit sowohl auf der Autobahn befindliche Kraftfahrzeuge, als auch an einer Auffahrt verhältnismäßig langsam fahrende Kraftfahrzeuge relevant, so daß ein großer Erfassungsbereich aufgrund der großen Eigengeschwindigkeit gewählt werden muß. Ist hingegen das Kraftfahrzeug auf der Auffahrt, so weist dieses zwar selbst nur eine geringe Eigengeschwindigkeit auf aufgrund der großen Relativgeschwindigkeiten jedoch muß zum Erhalten einer ausreichenden Reaktionszeit ebenfalls ein großer Erfassungsbereich gewählt werden. Weiter darf auch bei einer Eigengeschwindigkeit von Null nicht ein Erfassungsbereich von Null gewählt werden, so wie dies beim Stand der Technik vorgeschlagen wird, da beispielsweise beim Einfädeln in den Verkehr Objekte im toten Winkel erfaßt werden müssen. Weitere vorteilhafte Ausgestaltungen der Erfindung ergeben sich aus den Unteransprüchen.

In einer weiteren bevorzugten Ausführungsform wird die Abstrahlcharakteristik des Abstands-Sensors mit zunehmender Eigengeschwindigkeit zum Horizont hin geneigt, um eine größere Distanz zu detektieren und den Erfassungsbereich eher in die Ferne zu verlagern.

In einer weiteren bevorzugten Ausführungsform werden in einem stehenden Kraftfahrzeug die Objekte zeitlich verfolgt. Dabei sind alle sich im Erfassungsbereich des Kraftfahrzeuges bewegenden Objekte relevant. Darüber hinaus sind Objekte relevant, die sich in den Erfassungsbereich hinein bewegen und dann darin stehen bleiben, beispielsweise ein Radfahrer, der sich einem an einer Ampel stehenden Kraftfahrzeug nähert und dann im toten Winkel stehen bleibt. Dazu kann der Auswerte- und Steuereinheit ein Zwischenspeicher zugeordnet werden, in dem von vorangegangenen Zeitpunkten Objektdaten gespeichert werden, so daß die Auswerte- und Steuereinheit den Verlauf eines Objektes nachvollziehen kann.

Weiter kann der Auswerte- und Steuereinheit eine digitale Straßenkarte zugeordnet werden, die beispielsweise Bestandteil einer Navigationsvorrichtung ist. Aus diesen Daten kann zusammen mit einer Positionsbestimmungseinrichtung eine verbesserte Voreinstellung für den einzustellenden Erfassungsbereich vorgenommen werden.

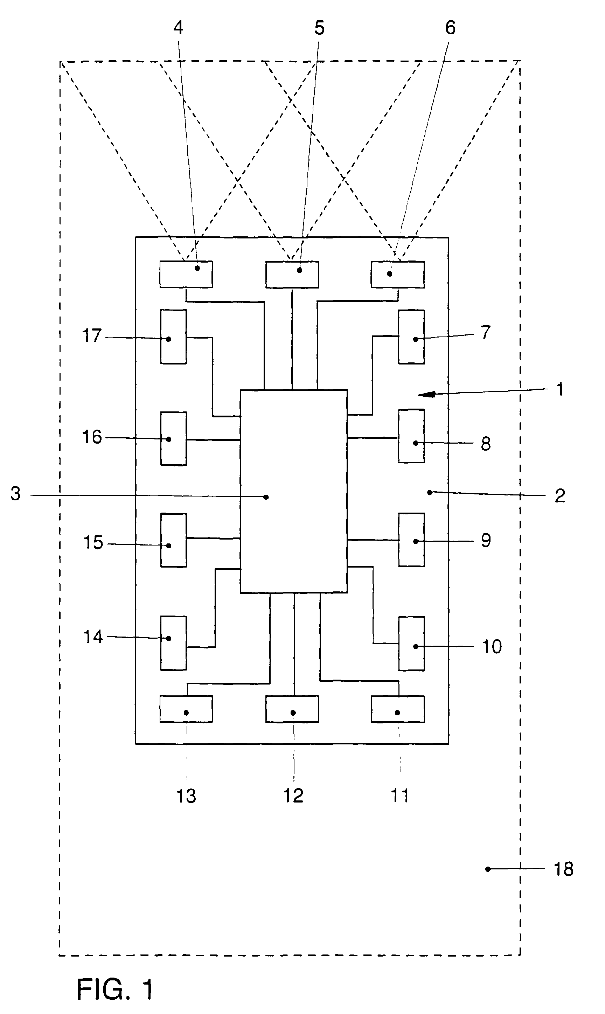

Die Erfindung wird nachfolgend anhand eines bevorzugten Ausführungsbeispieles näher erläutert. Die einzige Figur zeigt eine schematische Draufsicht auf ein Kraftfahrzeug mit einer Vorrichtung zur Erfassung von Objekten im Umfeld eines Kraftfahrzeuges.

Die Vorrichtung 1 zur Erfassung von Objekten im Umfeld eines Kraftfahrzeuges 2 umfaßt eine Auswerte- und Steuereinheit 3 und eine Anzahl von Abstands-Sensoren 4 - 17. Die Abstandssensoren 4 - 17 sind um das Kraftfahrzeug 2 herum angeordnet und detektieren Objekte innerhalb eines Erfassungsbereiches 18. Die Abstands-Sensoren 4 - 17 sind beispielsweise als Radar, Lidar- und/oder Ultraschall-Sensoren ausgebildet. Durch die Auswerte- und Steuereinheit 3 werden die Abstands-Sensoren 4 - 17 zur Abatrahlung eines Sensorsignals angeregt. Die von Objekten reflektierten Sensorsignale werden von den Abstands-Sensoren 4 bis 17 empfangen und an die Auswerte- und Steuereinheit 3 weitergeleitet. Der Auswerte- und Steuereinheit 3 wird darüber hinaus die Eigengeschwindigkeit V des Kraftfahrzeuges 2 vom Tachometer oder dem Motorsteuergerät zugeführt. Aus den Laufzeiten der Sensorsignale kann dann auf den Abstand der Objekte zurückgeschlossen werden. Mittels Differenzbildung bzw. Ausnutzung des Doppler-Effekts kann dann die Relativgeschwindigkeit der Objekte bestimmt werden. Über die Auswerte- und Steuereinheit 3 kann der Erfassungsbereich 18 der Abstands-Sensoren 4 bis 17 verändert werden, wozu diese beispielsweise mit unterschiedlicher Sendeleistung betrieben werden. Dabei kann vorgesehen sein, daß die Abstands-Sensoren 4 bis 17 je nach ihrer Position mit einem unterschiedlichen Erfassungsbereich betrieben werden. Dabei ist der Erfassungsbereich 18 derart zu wählen, daß Objekte rechtzeitig erkannt werden, um innerhalb der Reaktionszeiten eines Kraftfahrzeugführers gegebenenfalls ein Ausweichmanöver durchführen zu können und andererseits die Anzahl der zu erfassende Objekte auf das notwendige Minimum zu reduzieren.

Dazu verändert die Auswerte- und Steuereinheit 3 in Abhängigkeit von der Geschwindigkeit V und der erfaßten Relativgeschwindigkeit von Objekten den Erfassungsbereich 18 derart, daß dieser zu größeren Eigengeschwindigkeiten und/oder Relativgeschwindigkeiten hin vergrößert wird. Dabei kann weiter vorgesehen sein, daß der Einfluß der beiden Größen über Gewichtsfunktionen berücksichtigt wird, um beispielsweise die Eigengeschwindigkeit stärker als die Relativgeschwindigkeit zu werten. Da nicht immer Objekte erfaßt werden, kann dies dazu führen, daß der eingestellte Erfassungsbereich nicht optimal ist. Deshalb wird der Auswerte- und Steuereinheit 3 vorzugsweise eine digitale Straßenkarte mit einer Positionsbestimmungseinrichtung zugeordnet, aus deren Angaben, beispielsweise hinsichtlich der zulässigen Höchstgeschwindigkeit, eine genauere Voreinstellung für den Erfassungsbereich 18 abgeleitet werden kann.

Weiter wird der Auswerte- und Steuereinrichtung 3 ein Zwischenspeicher zugeordnet, in dem die Objektdaten von einem vorangegangenen Zeitpunkt abgespeichert werden. Weist das Kraftfahrzeug 2 eine Eigengeschwindigkeit V=0 auf, so werden wie bisher Objekte erfaßt, die in den Erfassungsbereich 18 sich hinein bewegen, wohingegen Objekte mit einer Relativgeschwindigkeit Null, also selbst still stehen, unkritisch sind. Allerdings können Objekte, die sich in den Erfassungsbereich 18 hinein bewegen und in diesem stehenbleiben, relevant sein. Zur Erfassung dieser Objekte wird mittels des Zwischenspeichers überprüft, ob ein stillstehende Objekt sich kurz davor bewegt hat. Ein Beispiel für eine solche Verkehrssituation ist das Annähern eines Kraftfahrzeuges an das stehende Kraftfahrzeug vor einer roten Ampel.

Mittels der zuvor beschriebenen Verfahrensschritte ist die Anzahl der erfaßten Objekte zwar unter Umständen reduziert worden, jedoch im Normalfall immer noch zu groß, um alle dem Kraftfahrzeugführer anzuzeigen. Mittels prinzipiell aus ähnlichen Vorrichtungen bekannten Schritten, kann dann noch einmal eine Klassifizierung der erfaßten Objekte erfolgen. Beispielsweise kann aus Ort und Art der Relativgeschwindigkeit auf eine Fahrspur für den Gegenverkehr geschlossen werden, so daß dort erfaßte Objekt nicht angezeigt zu werden brauchen.

## Patentansprüche

1. Verfahren zur Erfassung von Objekten im Umfeld eines Kraftfahrzeuges (2), mittels mindestens teilweise um das Kraftfahrzeug (2) herum angeordneten Abstands-Sensoren (4 - 17), einer mit den Abstands-Sensoren (4 - 17) verbundenen Auswerte- und Steuereinheit (3), umfassend folgende Verfahrensschritte:
a) Aussenden von gepulsten oder modulierten Sensorsignalen durch die Abstands-Sensoren (4 - 17),
b) Empfangen der von zu erfassenden Objekten reflektierten Sensor-Signale durch die Abstands-Sensoren (4 - 17),
c) Übergeben der empfangenen Sensorsignale an die Auswerte- und Steuereinheit (3), wobei der Auswerte- und Steuereinheit (3) zusätzlich ein die Eigengeschwindigkeit des Kraftfahrzeuges (2) beinhaltendes Signal zugeführt wird,
d) Ermitteln des Abstandes und der Relativgeschwindigkeit der erfaßten Objekte,
e) Adaptieren des Erfassungsbereiches (18) der Abstands-Sensoren (4 - 17) in Abhängigkeit von der Eigengeschwindigkeit und der Relativgeschwindigkeit der erfaßten Objekte, wobei der Erfassungsbereich (18) zu höheren Eigengeschwindigkeiten und/oder Relativgeschwindigkeiten hin vergrößert wird und zu geringeren Eigengeschwindigkeiten und/oder Relativgeschwindigkeiten hin auf einen Grenzwert größer Null verkleinert wird und
f) Anzeigen der erfaßten und klassifizierten Objekte.

2. Verfahren nach Anspruch 1, dadurch gekennzeichnet, daß die Abstrahlcharakteristik der Abstands-Sensoren (4 - 17) mit zunehmender Eigengeschwindigkeit V zum Horizont geneigt wird.

3. Verfahren nach Anspruch 1 oder 2, dadurch gekennzeichnet, daß bei einer Eigengeschwindigkeit V = 0 nur Objekte mit einer Relativgeschwindigkeit ungleich Null oder in den Erfassungsbereich (18) sich hinein bewegende Objekte, die nachfolgend eine Relativgeschwindigkeit Null aufweisen, ausgewertet und angezeigt werden.

4. Vorrichtung zur Erfassung von Objekten im Umfeld eines Kraftfahrzeuges, umfassend mindestens teilweise um das Kraftfahrzeug herum angeordnete Abstands-Sensoren, eine mit den Abstands-Sensoren verbundene Auswerte- und Steuereinheit, der die Eigengeschwindigkeit V des Kraftfahrzeuges zuführbar ist, dadurch gekennzeichnet, daß der Erfassungsbereich (18) der Abstands-Sensoren (4 - 17) von der Auswerte- und Steuereinheit (3) in Abhängigkeit von der Eigengeschwindigkeit V und Relativgeschwindigkeit der Objekte veränderbar ist.

5. Vorrichtung nach Anspruch 4, dadurch gekennzeichnet, daß der Neigungswinkel der Abstands-Sensoren (4 - 17) veränderbar ist.

6. Vorrichtung nach Anspruch 4 oder 5, dadurch gekennzeichnet, daß der Auswerte- und Steuereinheit (3) ein Zwischenspeicher von Objektdaten zugeordnet ist.

7. Vorrichtung nach Anspruch 4 bis 6, dadurch gekennzeichnet, daß der Auswerte- und Steuereinheit (3) eine digitale Straßenkarte zugeordnet ist.
